# EUROPÄISCHE PATENTSCHRIFT

(11) **EP 2 855 246 B1**
(45) Veröffentlichungstag und Bekanntmachung des Hinweises auf die Patenterteilung: **16.05.2018**
(21) Anmeldenummer: 13729253.8
(22) Anmeldetag: 31.05.2013
(51) Int. Cl.: B62D 35/00

(54) **HECKSPOILEREINRICHTUNG FÜR EIN FAHRZEUG**
REAR SPOILER SYSTEM FOR A VEHICLE
SYSTÈME DE BÉQUET ARRIÈRE POUR VÉHICULE

(30) Priorität: 02.06.2012 DE 102012011080
(43) Veröffentlichungstag der Anmeldung: 08.04.2015
(73) Patentinhaber: WABCO GmbH, 30453 Hannover (DE)
(72) Erfinder: DIECKMANN, Thomas, 30982 Pattensen (DE); INKERMANN, David, 38106 Braunschweig (DE); NEUMANN, Christopher, 31061 Alfeld (DE); PETZOLD, Rouven, 38102 Braunschweig (DE); WOKOECK, Ralf, Rainer, 38116 Braunschweig (DE); ZIELKE, Frank, 30890 Barsinghausen (DE)
(74) Vertreter: Lauerwald, Jörg
(86) Internationale Anmeldenummer: PCT/EP2013/001606
(87) Internationale Veröffentlichungsnummer: WO 2013/178365

(56) Entgegenhaltungen:
- WO-A2-2008/024386
- WO-A2-2011/019768
- US-A- 4 214 787
- US-A- 4 458 936
- US-A- 5 498 059

## Beschreibung

Die Erfindung betrifft eine Heckspoilereinrichtung für ein Fahrzeug, insbesondere Nutzfahrzeug, und eine Anordnung aus einem Nutzfahrzeug mit einer derartigen Heckspoilereinrichtung.

Heckspoiler dienen der Verbesserung der Aerodynamik des Fahrzeugs und können den Kraftstoffverbrauch entsprechend senken. Sie werden im Heckbereich des Fahrzeugs angebracht und weisen im Allgemeinen Luftleitelemente auf, die die Konturen des Fahrzeugs nach hinten verlängern, z. B. mit gekrümmten Flächen. Derartige Heckspoiler können am Dach oder an den Seitenwänden befestigt werden.

Die DE 20 2009 014 476 U1, DE 20 2009 014 510 U1 und DE 20 2009 015 009 U1 zeigen Heckspoilerausbildungen, bei denen die Luftleitelemente bzw. Spoilerelemente verschiebbar oder schwenkbar angeordnet sind, um ein ungestörtes Öffnen der Tür zu ermöglichen.

Schwenk- oder klappbare Heckspoiler werden im Allgemeinen am Scharnier der Hecktür angebunden. Die DE 102 28 658 A1 zeigt verschiedene Klapplösungen, bei denen über ein Scharnier schwenkbare Planflächen im Fahrbereich eine aerodynamische Optimierung ermöglichen sollen.

Die DE 10 2008 036 888 A1 zeigt Ausbildungen von Heckspoilern und Anbindungen am Fahrzeug, bei denen u. a. vorgesehen ist, zwischen der Hecktür und dem Luftleitelement einen Mitnehmer anzubringen, der für eine weitgehend ausgeschwenkte Stellung der Tür ausgehängt werden kann. Beim Ausschwenken der Heckklappe nach außen um ihre vertikale Schwenkachse wird das Luftleitelement somit zunächst mit geschwenkt, bis es an die Außenflächen der Seitenwand gelangt. Beim nachfolgenden Ausschwenken der Heckklappe wird das flexible Mitnehmerelement entsprechend gestaucht.

Derartige Anbindungen der Luftleitelemente im Scharnierbereich ermöglichen im Allgemeinen eine Verstellung des Luftleitelementes zwischen der Hecktür und der Seitenwand, wenn die Hecktür - wie bei Nutzfahrzeugen oftmals vorgesehen - um 270° nach außen geschwenkt wird, um sie z. B. an der Seitenwand zu befestigen.

Derartige Systeme sind jedoch im Allgemeinen recht aufwendig. Sie weisen u.a. komplexe Gelenk- oder Scharnierausbildungen auf. Weiterhin ermöglichen einige Heckspoilersysteme lediglich den Einsatz relativ kurzer Luftleitelemente, wodurch die Verbesserung der Aerodynamik begrenzt ist.

Weiterhin ist dieser Bauraum im Scharnierbereich der Hecktür bei auf schwenkender Hecktür sehr eng, so dass komplexere Heckspoilerausbildungen den Aufschwenkvorgang um 270° beeinträchtigen können.

Die gattungsgemäße US 4,214,787 und die US 4,458,936 offenbaren Heckspoilereinrichtungen für Fahrzeuge. Der Erfindung liegt die Aufgabe zugrunde, eine Heckspoilereinrichtung zu schaffen, die mit relativ geringem Aufwand ausbildbar ist und eine sichere Verstellung zwischen Fahrstellung und Grundstellung ermöglicht.

Diese Aufgabe wird durch eine Heckspoilereinrichtung nach Anspruch 1. gelöst. Die Unteransprüche beschreiben bevorzugte Weiterbildungen.

Weiterhin ist eine Anordnung aus einem Nutzfahrzeug und einer derartigen, in seinem Heckbereich angebrachten Heckspoilereinrichtung vorgesehen.

Erfindungsgemäß weist die Heckspoilereinrichtung somit mindestens einen Seitenspoiler zur Anbringung an der Hecktür auf. Bei der üblichen Ausbildung eines Fahrzeughecks mit zwei jeweils seitlich aufschwingenden Hecktüren weist die Heckspoilereinrichtung somit zwei Seitenspoiler auf, die an jeweils einer der Hecktüren anzubringen sind.

Das Seiten-Luftleitelement des Seitenspoilers ist über eine zusätzliche Schwinge an der Hecktür anbringbar. Die Schwinge ist über ein erstes Drehgelenk, insbesondere eine vertikale erste Drehachse mit mehreren Drehgelenken, an der Hecktür anbringbar. Das Seiten-Luftleitelement ist über eine zweite Drehachse an der Schwinge angelenkt. Die zweite Drehachse ist somit vorteilhafterweise an oder zwischen dem - in Fahrstellung - hinteren Ende des Seiten-Luftleitelementes und dem - in Fahrstellung - hinteren Ende der Schwinge ausgebildet. Vorteilhafterweise sind hierfür mehrere vertikal beabstandete zweite Drehgelenke zwischen den Endbereichen der Schwinge und des Luftleitelementes ausgebildet.

Das Seiten-Luftleitelement wird vorzugsweise über ein am seinem vorderen Ende ausgebildetes Verriegelungsmittel lösbar am Fahrzeug verriegelt.

Somit wird eine verriegelbare und nach Entriegelung schwenkbare bzw. verstellbare Anordnung ausgebildet. Das Seiten-Luftleitelement kann insbesondere bündig an die entsprechende Seitenwand des Fahrzeugs anschließen bzw. fluchten. Anders als bei herkömmlichen Anbindungen des Seiten-Luftleitelementes am Scharnier ist das Seiten-Luftleitelement jedoch an seinem vorderen Endbereich entriegelbar, um nach Entriegelung um die Schwinge und mit der Schwinge zur Mitte der Hecktür geschwenkt zu werden.

Hierdurch werden bereits einige Vorteile erreicht. Der ansonsten enge Bauraum im Scharnierbereich der Hecktür wird nicht oder nicht in relevantem Umfang belegt; das seitliche Seiten-Luftleitelement kann nach der Entriegelung um die Schwinge zur Mitte hin eingeschwenkt werden, so dass die gesamte Hecktür nachfolgend nach außen um z. B. etwa 270° geschwenkt und z. B. an der Seitenwand angelegt oder befestigt werden kann. Der Seitenspoiler mitsamt Seiten- Luftleitelement und Schwinge wird somit zwischen der Hecktür und der Seitenwand aufgenommen, ohne im Scharnierbereich störend zu wirken. Die Gesamtlänge aus Schwinge und Seiten- Luftleitelement kann z. B. derart gewählt sein, dass der in der Grundstellung vollständig umgelegte Seitenspoiler sich etwas zur Türkante (Mitte des Fahrzeughecks) hin erstreckt; somit wird die Befestigung der Hecktür an der Seitenwand nicht durch den Seitenspoiler gestört.

Das erste Drehgelenk der Schwinge wird an der Hecktür vorteilhafterweise hinreichend vom Scharnier beabstandet angebracht, z. B. mit 10 cm oder mehr Abstand von dem Scharnier der Hecktür. Für die Befestigung können z. B. Löcher in die Hecktür gebohrt werden, die dann durch die ersten Drehgelenke wiederum verschlossen werden.

Das arretierbare Verriegelungsmittel am vorderen Ende des Seiten-Luftleitelementes kann gemäß alternativen Ausführungen an der Fahrzeugstruktur bzw. den Seitenwänden, oder auch an der Hecktür bzw. dem Türblatt erfolgen. In allen Fällen ergibt sich in der Fahrstellung bei geschlossener Hecktür die Ausbildung eines stabilen Dreiecks, dessen Seiten durch die Schwinge, das Seiten-Luftleitelement und das Fahrzeug gebildet werden und dessen Ecken durch das mindestens eine erste Drehgelenk, das zweite Drehgelenk und dem Verriegelungsmittel gebildet werden.

Dieser Ausbildung liegt der erfindungsmäßige Gedanke zugrunde, dass eine Ausbildung eines derartigen Dreiecks stabil ist, auch wenn zwei oder sogar drei der Ecken durch Drehgelenke bzw. Drehlager ausgebildet sind. Eine Arretierung des ersten und zweiten Drehgelenks ist somit nicht erforderlich. Es ergibt sich erfindungsgemäß eine Ausbildung, die auch ein Flattern oder nachgiebiges Vibrieren der Seiten-Luftleitelemente während der Fahrt verhindert oder gering hält, da das Seiten-Luftleitelement an seinem vorderen Endbereich arretiert und an seinem hinteren Ende durch die Schwinge gehalten wird. Somit kann das Material des Seiten- Luftleitelementes ggf. freier, z. B. auch dünner gewählt werden als bei herkömmlichen Ausbildungen mit hinten nicht angebundenem Luftleitelement.

Die Schwinge kann zur Ausbildung einer hinreichenden Stabilität z. B. auch mit Rippenstruktur oder Ausnehmungen zur Verringerung des Materialaufwandes und Gewichtes ausgebildet sein. Insgesamt ergeben sich ein relativ geringes Gewicht und geringe Herstellungskosten.

Eine derartiger erfindungsgemäßer Seitenspoiler ermöglicht eine Anbringung an unterschiedlichen Türvarianten und Türsystemen; insbesondere ist die genau Ausbildung des Scharniers der Hecktüren nicht relevant, die bei verschiedenen Herstellern und Fahrzeugtypen sehr unterschiedlich sein kann; es sind lediglich Befestigungen des ersten Drehlagers an der Hecktür durch z. B. Bohren von Löchern, und eine Arretieraufnahme für das Verriegelungsmittel am vorderen Ende bzw. der Vorderkante des seitlichen Seiten-Luftleitelementes vorzusehen.

Die Arretierung des vorderen Endes des Luftleitungselementes am Fahrzeug kann gemäß einer Ausbildung an der Hecktür selbst erfolgen. Somit wird das in der Fahrstellung ausgebildete stabile Dreieck durch Schwinge, Seiten-Luftleitelement und die Hecktür gebildet. Um einen bündigen Anschluss des Seiten-Luftleitelementes an der Seitenwand zu ermöglichen, kann sich hierzu z. B. ein im Bereich der Vorderkante des Seiten- Luftleitelementes angebrachtes Verbindungsmittel, z. B. eine Verbindungslasche, seitlich zu einer Arretieraufnahme an der Hecktür erstrecken. Somit kann auch bei Anbindung des Luftleitelementes an der Hecktür ein fester Abschluss des vorderen Endbereichs des Seiten-Luftleitelementes erreicht werden mit günstigen aerodynamischen Eigenschaften ohne Flatterneigung. Das Verriegelungsmittel kann z. B. als Öse oder Aufnahmeloch, die Arretieraufnahme als Befestigungspin an der Hecktür ausgebildet sein.

Bei einer hierzu alternativen Ausbildung wird das Seiten-Luftleitelement an seinem vorderen Ende nicht an der Hecktür, sondern an der Fahrzeugstruktur, das heißt dem sogenannten Portal des Heckbereichs des Fahrzeuges, oder auch an den Seitenwänden (wenn das Fahrzeug feste Seitenwände aufweist) befestigt. Bei einer derartigen Ausbildung kann eine selbsttätige Entrastung des Verriegelungsmittels beim Öffnen der Hecktür ermöglicht werden, da beim Aufschwingen der Hecktür die Position der ersten Drehachse gegenüber dem Verriegelungsmittel verändert wird. Diese selbsttätige Entrastung kann z. B. durch den Schwenkvorgang erfolgen, bei dem das Seiten-Luftleitelement mit seinem vorderen Verriegelungsmittel in der Rastaufnahme geschwenkt wird.

Gemäß einer besonders bevorzugten Ausbildung ist zusätzlich zu dem Seitenspoiler mindestens ein Dachspoiler, vorzugsweise an jeder Hecktür ein Dachspoiler, mit einem Dach-Luftleitelement vorgesehen, das vorzugsweise selbsttätig verstellbar zwischen einer Fahrstellung und einer eingeklappten Grundstellung. Vorteilhafterweise wird der Dachspoiler ausschließlich an der Hecktür bzw. dem Türblatt der Hecktür befestigt. Hierbei weist der Dachspoiler vorzugsweise eine Befestigungseinrichtung zur Befestigung an der Hecktür auf, an gegenüber der das Dach-Luftleitelement schwenkbar ist. Für die selbsttätige Verstellung ist an dem Dach -Luftleitelement z. B. ein Anlagemittel, insbesondere eine Nocke, ausgebildet, das in der Grundstellung z. B. nach hinten vorragt und beim Schließen der Hecktür an die Fahrzeugstruktur gelangt, sodass es beim weiteren Schließen der Hecktür verstellt wird, z. B. durch Abrollen an der Fahrzeugstruktur, und somit ein Schwenkmoment auf das Dach-Luftleitelement ausgeübt wird, das dieses nach oben in seine Fahrstellung schwenkt.

Die Befestigungseinrichtung kann z. B. überwiegend oder sogar ausschließlich von oben in die Hecktür bzw. das Türblatt der Hecktür gesetzt werden; falls die Hecktür an ihrer Oberseite geschlossen ist, können hierzu zunächst entsprechende Löcher gebohrt werden. Die Befestigungseinrichtung kann z. B. vertikal verlaufende Einsetzstangen aufweisen, die in die Löcher der Hecktür greifen.

Alternativ zu dieser Ausbildung mit starrer Kopplung zwischen Nocke und Dach- Luftleitelement, bei dem somit das Dach- Luftleitelement jeweils bei geschlossener Hecktür immer nach hinten absteht, ist es grundsätzlich auch möglich, dass das Dach- Luftleitelement zusätzlich auch bei geschlossener Hecktüre manuell gelöst und eingeklappt werden kann, z. B. um ein platzsparendes Abstellen des Fahrzeugs und einen Bahn- oder Schiffstransport zu verbessern.

Es ergeben sich durch den erfindungsgemäßen Dachspoiler einige Vorteile. So ist vorteilhafterweise eine Befestigung des Dachspoilers an der Fahrzeugstruktur oder dem Fahrzeugdach nicht erforderlich; eine Befestigung an der Hecktür ist ausreichend. Somit ist die Befestigung schnell ausbildbar und von Dachtypen oder der Ausbildung der Dachstruktur unabhängig. Indem Vorzugsweise der Dachspoiler sogar lediglich an der Oberkante der Hecktür befestigt wird, z. B. durch vertikales Einhängen, ist ein schneller Anbringvorgang möglich, ohne die Außenfläche der Hecktüren zu belegen.

Die Befestigungseinrichtung kann kostengünstig, z. B. einteilig, z. B. als Metallplatte mit entsprechender Ausbildung von Einsatzstangen bzw. Einsatzbereichen ausgebildet werden, wobei das Dach-Luftleitelement z. B. als Kunststoff- Spritzgussteil mit einem oder mehreren, nach hinten vorragenden Nocken mit abgerundeter Nockenfläche ausgebildet sein kann.

Somit wird auf überraschend einfache Weise eine kostengünstige Ausbildung, eine einfache Anbringung an lediglich der Hecktür, und ein selbsttätiger Verstellvorgang beim Öffnen und Schließen der Hecktür ermöglicht.

Hierbei treten erfindungsgemäß insbesondere synergistische Effekte zwischen der Ausbildung des Dachspoilers und des Seitenspoilers auf, da beim Öffnen der Hecktür zunächst die Dachspoiler selbsttätig einfahren (Herunterschwenken) und somit nachfolgend ein Auflegen der Schwinge und des Seiten-Luftleitelementes ermöglichen, wobei gegebenenfalls auch die Schwinge vertikal kürzer ausgebildet sein kann, so dass sie nur auf die Hecktür gelegt wird und sich in vertikaler Richtung nicht bis zu dem Dach- Luftleitelement erstreckt. Die nach hinten abstehende Nocke stört den Schwenkvorgang und das Auflegen der Seitenspoiler nicht.

Somit erfolgt beim Öffnen der Hecktür zunächst ein selbsttätiges Herunterklappen bzw. Herunterschwenken des Dach-Luftleitelementes aufgrund dessen Eigengewichts, ohne die Seitenspoiler zu beeinträchtigen. Nachfolgend können die Seitenspoiler wie oben beschrieben vollständig umgelegt werden.

Die Erfindung wird im Folgenden anhand der beiliegenden Zeichnungen an einigen Ausführungsformen erläutert. Es zeigen:
- Fig. 1: ein Nutzfahrzeug in perspektivischer Heckansicht bei geschlossenen Hecktüren mit einer Heckspoilereinrichtung gemäß einer Ausführungsform in Fahrstellung;
- Fig. 2: eine der Fig. 1 entsprechende Heckansicht mit einer geöffneten Hecktür;
- Fig. 3: eine Ausschnittsvergrößerung bei teilweise geöffneter Hecktür;
- Fig. 4: eine perspektivische Ansicht der Heckspoilereinrichtung von hinten;
- Fig. 5: die Rückansicht einer Fahrzeugtür mit Dachspoiler gemäß einer Ausführungsform;
- Fig. 6: Schritte a), b), c) der anfänglichen Verstellung des Seitenspoilers beim Öffnen der Hecktür sowie Arretierung des Seiten-Luftleitelementes an der Fahrzeugstruktur, und
- Fig. 7: eine Ausführungsform mit Arretierung des Seiten- Luftleitelementes an der Hecktür.

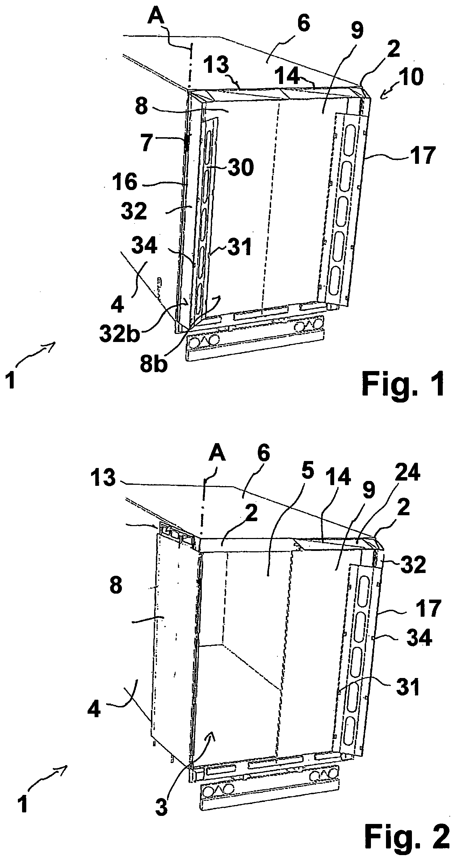

Ein Nutzfahrzeug 1 weist gemäß Fig. 1, 2 eine Fahrzeugstruktur 2 auf, die im hinteren Bereich auch als Portal bezeichnet wird, sowie einen Laderaum 3, der nach außen durch Seitenwände 4, 5 und nach oben durch ein Fahrzeugdach 6 begrenzt ist; die Seitenwände 4, 5 und das Fahrzeugdach 6 können bei z. B. einem Kastenwagen fest bzw. als tragende Teile ausgebildet sein und entsprechend fest mit der Fahrzeugstruktur 2 verbunden sein; weiterhin ist auch die Ausbildung der Seitenwände 4, 5 und ggf. des Fahrzeugdachs 6 mit Planen bekannt.

Der Laderaum 3 ist nach hinten durch zwei Hecktüren 8, 9 verschließbar, die von ihrer geschlossenen Stellung der Fig. 1 ausgehend um ihr Scharnier 7 um etwa 270° nach außen um ihre jeweilige Schwenkachse A schwenkbar und z. B. an der jeweiligen Seitenwand 4, 5 anlegbar oder auch verriegelbar sind.

An dem Nutzfahrzeug 1 ist eine Heckspoilereinrichtung 10 angebracht, die zwei Dachspoiler 13, 14 und zwei Seitenspoiler 16 und 17 aufweist.

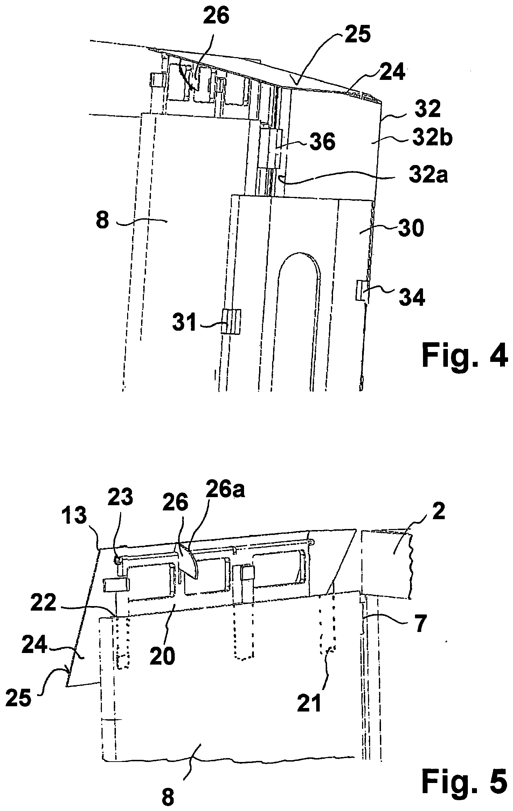

Die beiden Dachspoiler 13, 14 werden vorteilhafterweise ausschließlich an den beiden Hecktüren 8, 9 befestigt, indem sie von oben her eingesetzt werden. Gemäß Fig. 5 weist der (in Fahrtrichtung) linke Dachspoiler 13 eine Befestigungseinrichtung (Lagerteil) 20 auf, die an der Hecktür 8 befestigt wird; hierzu kann die Befestigungseinrichtung 20 z. B. drei sich vertikal nach unten erstreckende Einsetz-Stangen 21 auf, die von oben in die Hecktür 8 gesetzt werden; falls die Hecktür 8 an ihrer oberen Seite bereits offen ist, können die Einsetz-Stangen 21 entsprechend direkt eingesetzt werden; bei einem geschlossenen Türblatt können zunächst Löcher 22 in die Oberkante 8 a der Hecktür gebohrt werden, in die dann nachfolgend die Einsetz-Stangen 21 von oben eingesetzt werden.

Weiterhin weist die Befestigungseinrichtung 20 eine Drehachse 23 für ein Dach-Luftleitelement 24 auf. Das Dach-Luftleitelement 24 ist als einteiliges Kunststoff-Teil, z. B. Kunststoff-Spritzgussteil, gefertigt mit planer oder leicht gebogener Außenfläche 25, deren Formgebung als solches bekannt ist. Bei geschlossener Hecktür 8 bildet das Dach-Luftleitelement 24 im wesentlichen eine Verlängerung des Fahrzeugdachs 6, z. B. mit leichter Krümmung nach unten. Weiterhin weist das Dach-Luftleitelement 24 eine oder mehrere Nocken 26 auf, die z. B. bei Spritzguss-Herstellung mit ausgebildet werden.

Die Befestigungseinrichtung 20 kann z. B. aus Stahl oder auch aus Kunststoff ausgebildet sein. Der gesamte Dachspoiler 13 ist somit in der gezeigten Ausführung z. B. zweiteilig mit der Befestigungseinrichtung 20 und dem Dach-Luftleitelement 24 ausgebildet, gegebenenfalls mit zusätzlicher Drehachse 23. Bei in der Hecktür 8 verankerter Befestigungseinrichtung 20 steht die Nocke 26 nach hinten vor; das Dach-Luftleitelement 24 ist aufgrund seines Eigengewichts um die Drehachse 23 nach unten geschwenkt und liegt z. B. an der Hecktür 8 an. Wird die Hecktür 8 von der in Fig. 5 gezeigten geöffneten Stellung nachfolgend zugeschwenkt in die Fahrstellung der Fig. 4, so gelangt zunächst die nach hinten vorstehende Nocke 26 gegen die Fahrzeugstruktur 2, z. B. einen Querträger im oberen Heckbereich des Nutzfahrzeugs 1. Die Nocke 26 weist hierbei eine gekrümmte Nockenfläche 26 a auf, die an der Fahrzeugstruktur 2 beim Zuklappen der Hecktür 8 abrollt, sodass das gesamte Dach- Luftleitelement 24 um die Drehachse 23 nach oben schwenkt.

Bei geschlossener Hecktür 8 liegt somit die Nocke 26 weiter mit ihrer Nockenfläche 26 a an der Fahrzeugstruktur 2 an und wird somit in ihrer nach oben vorragenden Stellung durch die Nocke 26 bzw. die mehreren Nocken 26 abgestützt. Wird die Hecktür 8 nachfolgend wieder geöffnet, rollt die Nocke 26 an der Fahrzeugstruktur 2 ab und steht wiederum nach hinten vor; das Dach-Luftleitelement 24 fällt somit von seiner Funktionsstellung bei zugeklappter Hecktür 8 selbsttätig aufgrund seines Eigengewichts in die herunter geschwenkte bzw. herunter geklappte Grundstellung der Fig. 5. Eine Betätigung des Benutzers ist somit nicht erforderlich.

Die beiden Seitenspoiler 16, 17 weisen jeweils eine Schwinge 30 und ein Seiten-Luftleitelement 32 auf. Die Schwinge 30 ist in z. B. vier ersten Drehgelenken 31 an der Außenseite 8b der Hecktür 8 befestigt, wozu z. B. Löcher 33 in die Hecktür 8 gebohrt werden können. Das Seiten- Luftleitelement 32 ist wiederum über zweite Drehgelenke 34 an der Schwinge 30 befestigt. Die Schwinge 30 kann z. B. aus Metall, z. B. Aluminium oder Stahl, gefertigt sein; das Seiten-Luftleitelement 32 ist wiederum vorteilhafterweise aus Kunststoff, z. B. als Spritzgussteil, ausgebildet.

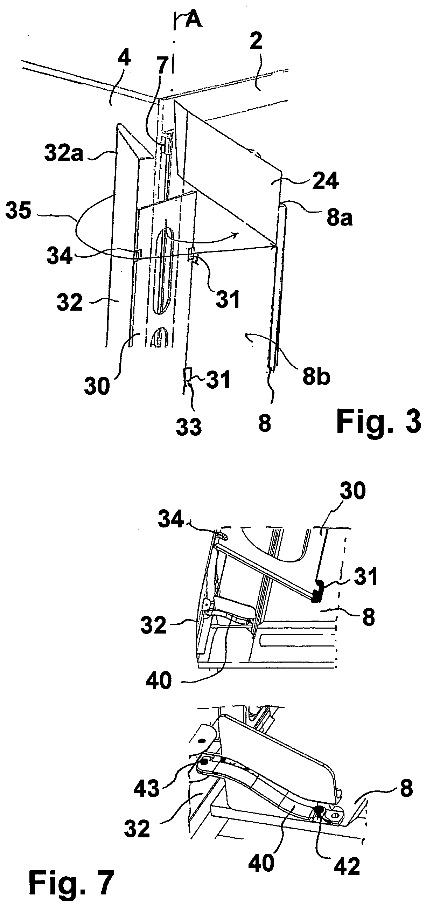

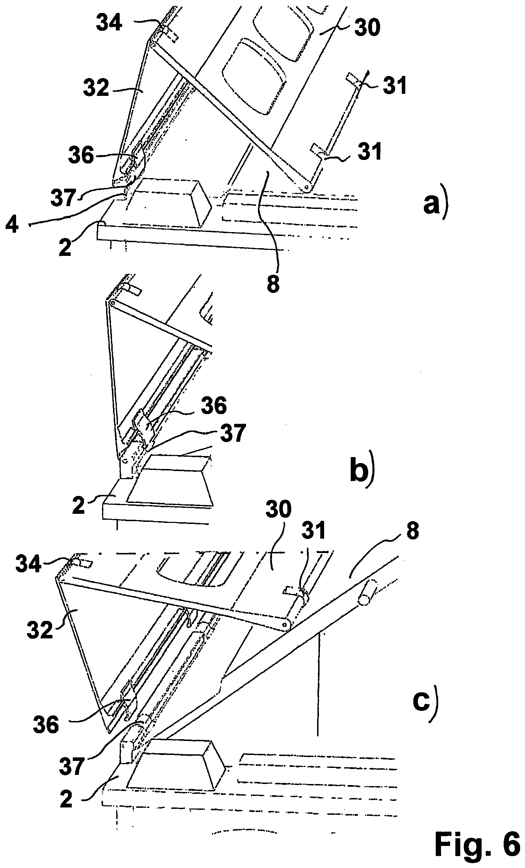

Die Seiten-Luftleitelemente 32 sind jeweils in einem Verriegelungsmittel 36, 40 in entsprechenden Arretieraufnahmen 37, 42 am Nutzfahrzeug 1 verrastet. Diese Arretierung oder Verrastung kann gemäß alternativen Ausführungsformen entweder nach Fig. 7 an der jeweiligen Hecktür 8, 9 oder nach Fig. 6 7 an der Fahrzeugstruktur 2 bzw. an den Seitenwänden 4, 5 erfolgen.

Bei der Ausführungsform der Fig. 7 mit Arretierung an der Hecktür 8, d.h. dem Türblatt selbst, kann z. B. im Bereich der Vorderkante 32a des Seiten-Luftleitelementes 32 eine Verriegelungslasche 40 vorgesehen oder als zusätzliches Bauteil angebracht sein, die in einem als Arretieraufnahme dienenden Verriegelungsstift 42, der an der Hecktür 8 bzw. der Außenseite 8 b der Hecktür 8 angebracht ist, verriegeln kann. Gemäß Fig. 7 schließt somit die Vorderkante 32a bündig mit der Seitenwand 3, wobei über die zur Mitte hin ragende Verriegelungslasche 40 dennoch eine sichere Befestigung an der Hecktür 8 möglich ist. Die Verriegelungslasche 40 kann aus Metall oder Kunststoff gefertigt sein; sie kann z. B. an einer entsprechenden Aufnahme des Seiten-Luftleitelementes 32 durch eine Schraube 43 oder Bolzen befestigt sein.

Bei der Ausführungsform der Fig. 6 erfolgt ist als Verriegelungsmittel ein Rasthaken (Verriegelungshaken) 36 am Ende des Seiten- Luftleitelementes 32 angebracht, der in einer Arretieraufnahme 37 an der Seitenwand 4 oder der Fahrzeugstruktur 2 verriegelt

Die Seiten-Luftleitelemente 32 bilden eine Verlängerung der Seitenwände 4, 5, wie es als solches bei Seitenspoilern üblich ist; hierzu können die Seiten-Luftleitelemente 32 eine plane oder geeignet gekrümmte Form aufweisen. Die Drehgelenke 31, 34 sind vorteilhafterweise, wie in den Figuren gezeigt, an den Enden der Schwingen 30 ausgebildet. Entsprechend sind die zweiten Drehgelenke 34 und die Verriegelungsmittel 36,40 vorteilhafterweise in Endbereichen der Seiten-Luftleitelemente 32 vorgesehen.

Die Schwinge 30 und das Seiten-Luftleitelement 32 bilden somit zusammen mit dem Fahrzeug 1, nach Fig. 7 mit der jeweiligen Hecktür 8 oder 9 des Fahrzeugs 1, ein stabiles Dreieck, dessen Ecken durch die beiden Drehgelenke 31, 34 und die Rastverbindung zwischen dem Verriegelungsmittel 36, 40 und der Arretieraufnahme 37 bzw. dem Verriegelungsstift 42 gebildet werden.

Von der Fahrstellung wird die Heckspoilereinrichtung 10 in ihre Grundstellung eingeklappt, indem zunächst die Hecktüren 8, 9 etwas geöffnet werden. Hierdurch fällt jedoch das jeweilige linke und rechte Dach- Luftleitelement 24 der Dachspoiler 13, 14 nach unten und liegt somit an der jeweiligen Hecktür 8, 9 an. Durch das Öffnen der Hecktüren 8 und 9 kann bei der Ausführungsform der Fig. 6 in Stellung a) bereits ein selbsttätiges Ausrasten des Verriegelungshakens 36 aus der Arretieraufnahme 37 erfolgen. Es ist jedoch auch eine Ausbildung mit manueller Ausrastung möglich. Bei Befestigung des Seiten- Luftleitelementes 2 an dem Verriegelungsstift 42 der Hecktür 8 oder 9 gemäß Fig. 7 ist immer eine manuelle Entrastung vorgesehen.

Nachfolgend die gesamten Seitenspoiler 16, 17 jeweils zur Mitte hin eingeklappt, indem z. B. ein Benutzer das jeweilige Seiten-Luftleitelement 32 ergreift und in einer großen Schwenkbewegung derartig nach innen schwenkt, dass das Seiten-Luftleitelement 32 um die zweiten Drehgelenke 34 an der Schwinge 30 und die die Schwinge 30 in den ersten Drehgelenken 31 an der Hecktür 8 bzw. 9 schwenkt. Bei dieser Verstellung in die Grundstellung wird die Schwinge 30 z. B. um etwa 100° umgelegt wird und das Seiten-Luftleitelement 32 gegenüber der Schwinge 32 ergänzend um z. B. wiederum etwa 100° geschwenkt. In Fig. 3 ist die Bewegungsbahn 35 der Vorderkante 32 a des Seiten-Luftleitelementes 32 eingezeichnet. Die Schwingen 30 können vorzugsweise direkt an der Hecktür 8 bzw. 9 flach zur Anlage kommen; das Seiten-Luftleitelement 32 kann in seinem oberen Bereich an das jeweilige heruntergeklappte Dach-Luftleitelement 24 zur Anlage kommen.

Dann werden die Hecktüren 8, 9 um ihre Schwenkachsen A vollständig nach außen umgelegt, mit einem Gesamt-Schwenkwinkel von etwa 270°. Die Heckspoilereinrichtung 10 mit Dachspoilern 13, 14 und Seitenspoilern 16, 17 wird somit zwischen der Hecktür 8 oder 9 und der Seitenwand 3 oder 4 aufgenommen.

In der verriegelten bzw. verrasteten Fahrstellung liegt die Vorderkante 32 a des Seiten-Luftleitelementes 32 vorteilhafterweise an oder hinter der Fahrzeugstruktur 2. Somit schließt eine Außenfläche 32 b (Luftleitfläche) des Seiten-Luftleitelementes 32 bündig mit der linken Seitenwand 4, sodass sich im Übergangsbereich keine Wirbel bilden.

### Bezugszeichenliste

- 1: Nutzfahrzeug
- 2: Fahrzeugstruktur
- 3: Laderaum
- 4,5: Seitenwände
- 6: Fahrzeugdach
- 7: Scharnier
- 8,9: Hecktüren
- 8a: Oberkante der Hecktür 8
- 8b: Außenseite der Hecktür 8

- 10: Heckspoilereinrichtung
- 13, 14: Dachspoiler
- 16, 17: Seitenspoiler

- 20: Befestigungseinrichtung (Lagerteil) des Dachspoilers 13, 14
- 21: Einsetz-Stangen
- 22: Löcher in Oberkante 8a
- 23: Drehachse
- 24: Dach-Luftleitelement
- 25: Außenfläche
- 26: Nocke
- 26a: Nockenfläche

- 30: Schwinge
- 31: erste Drehgelenke
- 32: Seiten-Luftleitelement
- 32a: Vorderkante des Seiten-Luftleitelementes 32
- 33: Löcher in der Hecktür 8
- 34: zweite Drehgelenke zwischen Seiten- Luftleitelement 32 und Schwinge 30
- 35: Bewegungsbahn der Vorderkante 32 a des Seiten-Luftleitelementes 32
- 36: Rasthaken (Verriegelungshaken)
- 37: Arretieraufnahme an der Seitenwand 4 oder Fahrzeugstruktur 2

- 40: Verriegelungslasche
- 42: Verriegelungsstift (Arretieraufnahme)
- 43: Schraube oder Bolzen

- A: Schwenkachse der Hecktüren 8, 9

## Patentansprüche

1. Heckspoilereinrichtung (10) für ein mindestens eine Hecktür (8, 9) aufweisendes Fahrzeug (1),
wobei die Heckspoilereinrichtung (10) mindestens einen Seitenspoiler (16, 17) mit mindestens einem Seiten-Luftleitelement (32) aufweist, das zwischen einer Fahrstellung zur Konturverlängerung und aerodynamischen Luftleitung bei geschlossener Hecktür (8, 9) und einer Grundstellung bei geöffneter Hecktür (8, 9) verstellbar ist,
wobei
der Seitenspoiler (16, 17) eine Schwinge (30) mit einem ersten Drehgelenk (31) zur schwenkbaren Befestigung an der Hecktür (8, 9) aufweist, das Seiten-Luftleitelement (32) über die Schwinge (30) verstellbar an der Hecktür (8, 9) angebracht ist, und **dadurch gekennzeichnet, dass** das Seiten-Luftleitelement (32) an seinem vorderen Endbereich (32a) ein Verriegelungsmittel (36) zur lösbaren und verriegelbaren Befestigung an dem Nutzfahrzeug (1) aufweist, wobei das Seiten-Luftleitelement (32) mittels mindestens eines zweiten Drehgelenks (34) schwenkbar an der Schwinge (30) angelenkt ist,
wobei das mindestens eine zweite Drehgelenk (34) an oder zwischen einem hinteren Ende des Seiten-Luftleitelementes (32) und einem hinteren Ende der Schwinge (30) vorgesehen ist.

2. Heckspoilereinrichtung nach Anspruch 1, **dadurch gekennzeichnet, dass** sie mehrere vertikal beabstandete zweite Drehgelenke (34) und/oder mehrere vertikal beabstandete und manuell lösbare und verriegelbare Verriegelungsmittel (36), z. B. Rasthaken (36), zur Verriegelung in Arretieraufnahmen (37, 42) des Fahrzeugs (1) aufweist.

3. Heckspoilereinrichtung (10) nach Anspruch 1 oder 2, **dadurch gekennzeichnet, dass** in der Fahrstellung durch die Schwinge (30), das Seiten-Luftleitelement (32) und das Fahrzeug (1) ein Dreieck ausbildbar ist, dessen Ecken durch das mindestens eine erste Drehgelenk (31), das mindestens eine zweite Drehgelenk (34) und das mindestens eine Verriegelungsmittel (36) gebildet sind.

4. Heckspoilereinrichtung (10) nach einem der vorhergehenden Ansprüche, **dadurch gekennzeichnet, dass** mehrere, vertikal zueinander beabstandete erste Drehgelenke (31) zur Befestigung in Löchern (33) der Hecktüre (8, 9) vorgesehen sind.

5. Heckspoilereinrichtung (10) nach einem der vorherigen Ansprüche, **dadurch gekennzeichnet, dass** das Verriegelungsmittel (36) an der Fahrzeugstruktur (2) oder an einer Seitenwand (4, 5) des Fahrzeugs (1) verriegelbar ist.

6. Heckspoilereinrichtung (10) nach Anspruch 5, **dadurch gekennzeichnet, dass** das Verriegelungsmittel (36) bei Aufschwenken der Hecktür (8, 9) selbsttätig entriegelbar ist.

7. Heckspoilereinrichtung (10) nach einem Ansprüche 1 bis 4, **dadurch gekennzeichnet, dass** das Verriegelungsmittel (36) an der Hecktür (8, 9) des Fahrzeugs (1) verriegelbar ist.

8. Heckspoilereinrichtung (10) nach Anspruch 7, **dadurch gekennzeichnet, dass** das Verriegelungsmittel (36) ein sich in seitlicher Richtung zur Mitte des Fahrzeugs (1) hin erstreckendes Verriegelungsteil (40), z. B. eine Verriegelungslasche (40), zur lösbaren Verriegelung an einer türseitigen Arretieraufnahme (42), z. B. einem Verriegelungsstift (42), aufweist.

9. Heckspoilereinrichtung (10) nach einem der vorherigen Ansprüche,
**dadurch gekennzeichnet, dass** sie weiterhin mindestens einen Dachspoiler (13, 14) mit einem Dach-Luftleitelement (24) aufweist,
wobei der Dachspoiler (13, 14) zur Befestigung an einer Hecktür (8, 9) ohne Befestigung an der Fahrzeugstruktur (2) ausgebildet ist,
wobei das Dach-Luftleitelement (24) bei Schließen der Hecktüre (8, 9) selbsttätig in eine Fahrstellung aufstellbar und bei Öffnen der Hecktüre (8, 9) selbsttätig in eine Ruhestellung verstellbar ist.

10. Heckspoilereinrichtung (10) nach Anspruch 9, **dadurch gekennzeichnet, dass**
der Dachspoiler (13, 14) eine Befestigungseinrichtung (20) zum Befestigen an der Hecktür (8, 9) aufweist und das Dach-Luftleitelement (24), schwenkbar an dem Verriegelungsmittel (20) gelagert ist,
wobei das Dach-Luftleitelement (24) ein Anlagemittel (26) zur Anlage an einer Fahrzeugstruktur (2) des Fahrzeugs bei geschlossener Hecktür und zur Verstellung des Dach-Luftleitelementes (24) in dessen Fahrstellung bei Schließen der Hecktür (8) aufweist, und
wobei das Dach-Luftleitelement (24) bei geöffneter Hecktür durch sein Eigengewicht in seine Grundstellung herabschwenkbar ist mit nach hinten vorstehendem Anlagemittel (26).

11. Heckspoilereinrichtung (10) nach Anspruch 10, **dadurch gekennzeichnet, dass** das Anlagemittel eine Nocke (26) ist, die mit dem Dach-Luftleitelement (24) einteilig ausgebildet oder verbunden ist und eine Nockenfläche (26 a) zur Anlage an der Fahrzeugstruktur (2) und zum Abrollen an der Fahrzeugstruktur (2) unter Schwenken der Nocke (26) bei Schließen der Hecktür (8) aufweist.

12. Heckspoilereinrichtung (10) nach Anspruch 10 oder 11, **dadurch gekennzeichnet, dass** die Befestigungseinrichtung (20) zur Befestigung an einer Oberkante (8 a) der Hecktür (8), z. B. in Löchern an der Oberkante (8 a) der Hecktür (8) ausgebildet ist.

13. Heckspoilereinrichtung (10) nach einem der Ansprüche 10 bis 12,
**dadurch gekennzeichnet, dass** die Befestigungseinrichtung (20) eine Drehachse (23), in der das Dach-Luftleitelement (24 schwenkbar gelagert ist, und Einsetz-Mittel (21), z. B. vertikal nach unten sich erstreckende Einsetz-Stangen (21), zum Einsetzen in die Oberkante (8 a) der Hecktür (8) aufweist.

14. Heckspoilereinrichtung (10) nach einem der vorherigen Ansprüche,
**dadurch gekennzeichnet, dass** sie zwei Seitenspoiler (16, 17) und zwei Dachspoiler (13, 14) zur Befestigung an zwei Hecktüren (8, 9) aufweist, wobei in der Grundstellung bei geöffneter Hecktüre (8, 9) der Seitenspoiler jeweils zur Anlage an dem jeweiligen heruntergeklappten Dachspoiler vorgesehen ist.

15. Anordnung aus einem Fahrzeug und einer an dessen Heckbereich angebrachten Heckspoilereinrichtung (10) nach Anspruch 14,
wobei Hecktüren (8, 9) des Fahrzeugs (1) von ihrer geschlossen Stellung nach ihrer Entriegelung um etwa 270° nach außen klappbar und an jeweils einer Seitenwand (4, 5) des Fahrzeugs (1) anlegbar oder verriegelbar sind,
wobei jedes Seiten-Luftleitelement (32) jeweils nach Entriegelung des Verriegelungsmittels (36) um das zweite Drehgelenk (34) schwenkbar und die Schwinge (30) um das erste Drehgelenk (31) schwenkbar ist.

## Claims

1. Rear spoiler device (10) for a vehicle (1) with at least one rear door (8, 9),
wherein the rear spoiler device (10) has at least one side spoiler (16, 17) with at least one side air guide element (32) which can be moved between a driving position for contour extension and aerodynamic air guidance when the rear door (8, 9) is closed, and a base position when the rear door (8, 9) is open,
wherein
the side spoiler (16, 17) has a swing arm (30) with a first pivot joint (31) for pivotable fixing on the rear door (8, 9),
the side air guide element (32) is mounted adjustably via the swing arm (30) on the rear door (8, 9), and
**characterized in that**
the side air guide element (32) has a locking means (36) on its front end region (32a) for releasable and lockable fixing to the truck (1), wherein the side air guide element (32) is mounted pivotably on the swing arm (30) by means of at least one second pivot joint (34),
wherein the at least one second pivot joint (34) is provided on or between a rear end of the side air guide element (32) and a rear end of the swing arm (30).

2. Rear spoiler device according to Claim 1, **characterized in that** it has multiple vertically spaced second pivot joints (34) and/or multiple vertically spaced locking means (36) which can be released and locked manually, e.g. catch hooks (36), for locking in retaining receivers (37, 42) of the vehicle (1).

3. Rear spoiler device (10) according to Claim 1 or 2, **characterized in that** in the driving position, the swing arm (30), the side air guide element (32) and the vehicle (1) can form a triangle, the corners of which are formed by the at least one first pivot joint (31), the at least one second pivot joint (34) and the at least one locking means (36).

4. Rear spoiler device (10) according to any of the preceding claims, **characterized in that** multiple vertically spaced first pivot joints (31) are provided for fixing in holes (33) of the rear doors (8, 9).

5. Rear spoiler device (10) according to any of the preceding claims, **characterized in that** the locking means (36) can be locked to the vehicle structure (2) or a side wall (4, 5) of the vehicle (1).

6. Rear spoiler device (10) according to Claim 5, **characterized in that** the locking means (36) can be unlocked automatically when the rear doors (8, 9) swing open.

7. Rear spoiler device (10) according to any of Claims 1 to 4, **characterized in that** the locking means (36) can be locked to the rear door (8, 9) of the vehicle (1).

8. Rear spoiler device (10) according to Claim 7, **characterized in that** the locking means (36) has a locking part (40), e.g. a locking tab (40), extending in the lateral direction towards the middle of the vehicle (1), for releasable locking to a door-side retaining receiver (42), e.g. a locking pin (42).

9. Rear spoiler device (10) according to any of the preceding claims, **characterized in that** it furthermore comprises at least one roof spoiler (13, 14) with a roof air guide element (24), wherein the roof spoiler (13, 14) is configured for fixing to a rear door (8, 9) without fixing to the vehicle structure (2),
wherein the roof air guide element (24) is automatically erected into its driving position on closure of the rear doors (8, 9) and automatically moved into a rest position on opening of the rear doors (8, 9).

10. Rear spoiler device (10) according to Claim 9, **characterized in that**
the roof spoiler (13, 14) has a fixing device (20) for fixing to the rear door (8, 9), and the roof air guide element (24) is mounted pivotably on the locking means (20),
wherein the roof air guide element (24) has a support means (26) for support on the vehicle structure (2) of the vehicle when the rear doors are closed and for moving the roof air guide element (24) into its driving position when the rear doors (8) are closed, and
wherein when the rear doors are opened, the roof air guide element (24) can be pivoted under its own weight down into its base position with the support means (26) protruding to the rear.

11. Rear spoiler device (10) according to Claim 10, **characterized in that** the support means is a cam (26) which is formed integrally with or is connected to the roof air guide element (24) and has a cam face (26a) for support on the vehicle structure (2) and for rolling on the vehicle structure (2) during pivoting of the cam (26) when the rear door (8) is closed.

12. Rear spoiler device (10) according to Claim 10 or 11, **characterized in that** the fixing device (20) is configured for fixing to an upper edge (8a) of the rear door (8), e.g. in holes on the upper edge (8a) of the rear door (8).

13. Rear spoiler device (10) according to any of Claims 10 to 12, **characterized in that** the fixing device (20) has a rotary axis (23) in which the roof air guide element (24) is pivotably mounted, and insert means (21), e.g. vertically downwardly extending insert rods (21), for insertion in the upper edge (8a) of the rear door (8).

14. Rear spoiler device (10) according to any of the preceding claims, **characterized in that** it has two side spoilers (16, 17) and two roof spoilers (13, 14) for fixing to two rear doors (8, 9), wherein in the base position when the rear doors (8, 9) are open, the side spoilers are provided for support on the respective down-folded roof spoiler.

15. Arrangement of a vehicle and a rear spoiler device (10) according to Claim 14 arranged on its rear region,
wherein the rear doors (8, 9) of the vehicle (1) can be folded out after unlocking from their closed position by around 270° and can each be laid against or locked to a side wall (4, 5) of the vehicle (1),
wherein each side air guide element (32), after unlocking of the locking means (36), can be pivoted about the second pivot joint (34) and the swing arm (30) can be pivoted about the first pivot joint (31).

## Revendications

1. Système de béquet arrière (10) pour un véhicule (1) présentant au moins une porte arrière (8, 9),
dans lequel le système de béquet arrière (10) présente au moins un béquet latéral (16, 17) avec au moins un élément déflecteur d'air latéral (32), qui est déplaçable entre une position de roulage pour le prolongement du contour et la déflexion aérodynamique de l'air lorsque la porte arrière (8, 9) est fermée et une position de base lorsque la porte arrière (8, 9) est ouverte,
dans lequel
le béquet latéral (16, 17) présente une aile oscillante (30) avec une première articulation rotative (31) pour la fixation pivotante à la porte arrière (8, 9), l'élément déflecteur d'air latéral (32) est monté sur la porte arrière (8, 9) d'une façon déplaçable au moyen de l'aile oscillante (30), et
**caractérisé en ce que**
l'élément déflecteur d'air latéral (32) présente à sa région d'extrémité avant (32a) un moyen de verrouillage (36) pour la fixation détachable et verrouillable au véhicule utilitaire (1), dans lequel l'élément déflecteur d'air latéral (32) est articulé de façon pivotante sur l'aile oscillante (30) au moyen d'au moins une deuxième articulation rotative (34),
dans lequel ladite au moins une deuxième articulation rotative (34) est prévue sur ou entre une extrémité arrière de l'élément déflecteur d'air latéral (32) et une extrémité arrière de l'aile oscillante (30).

2. Système de béquet arrière selon la revendication 1, **caractérisé en ce qu'**il présente plusieurs deuxièmes articulations rotatives (34) espacées verticalement et/ou plusieurs moyens de verrouillage (36) espacés verticalement et détachables et verrouillables manuellement, par exemple des crochets d'encliquetage (36), pour le verrouillage dans des logements de blocage (37, 42) du véhicule (1).

3. Système de béquet arrière (10) selon la revendication 1 ou 2, **caractérisé en ce que** dans la position de roulage, il est possible de former au moyen de l'aile oscillante (30), de l'élément déflecteur d'air latéral (32) et du véhicule (1) un triangle, dont les sommets sont formés par ladite au moins une première articulation rotative (31), ladite au moins une deuxième articulation rotative (34) et ledit au moins un moyen de verrouillage (36).

4. Système de béquet arrière (10) selon l'une quelconque des revendications précédentes, **caractérisé en ce qu'**il est prévu plusieurs premières articulations rotatives (31) espacées verticalement pour la fixation dans des trous (33) des portes arrière (8, 9).

5. Système de béquet arrière (10) selon l'une quelconque des revendications précédentes, **caractérisé en ce que** le moyen de verrouillage (36) peut être verrouillé à la structure de véhicule (2) ou à une paroi latérale (4, 5) du véhicule (1).

6. Système de béquet arrière (10) selon la revendication 5, **caractérisé en ce que** le moyen de verrouillage (36) peut se déverrouiller automatiquement lors de l'ouverture de la porte arrière (8, 9).

7. Système de béquet arrière (10) selon l'une quelconque des revendications 1 à 4, **caractérisé en ce que** le moyen de verrouillage (36) peut être verrouillé à la porte arrière (8, 9) du véhicule (1).

8. Système de béquet arrière (10) selon la revendication 7, **caractérisé en ce que** le moyen de verrouillage (36) présente une partie de verrouillage (40) s'étendant dans la direction latérale vers le milieu du véhicule (1), par exemple une patte de verrouillage (40), pour le verrouillage détachable à un logement de blocage côté porte (42), par exemple une tige de verrouillage (42).

9. Système de béquet arrière (10) selon l'une quelconque des revendications précédentes, **caractérisé en ce qu'**il présente en outre au moins un béquet de toit (13, 14) avec un élément déflecteur d'air de toit (24), dans lequel le béquet de toit (13, 14) est configuré en vue de la fixation à une porte arrière (8, 9) sans fixation à la structure de véhicule (2), dans lequel l'élément déflecteur d'air de toit (24) peut se redresser automatiquement dans une position de roulage lors de la fermeture des portes arrière (8, 9) et se déplacer automatiquement dans une position de repos lors de l'ouverture des portes arrière (8, 9).

10. Système de béquet arrière (10) selon la revendication 9, **caractérisé en ce que** le béquet de toit (13, 14) présente un dispositif de fixation (20) pour la fixation à la porte arrière (8, 9) et l'élément déflecteur d'air de toit (24) est monté de façon pivotante sur le moyen de verrouillage (20),
dans lequel l'élément déflecteur d'air de toit (24) présente un moyen d'appui (26) pour l'appui sur une structure de véhicule (2) du véhicule lorsque la porte arrière est fermée et pour le déplacement de l'élément déflecteur d'air de toit (24) dans sa position de roulage lors de la fermeture de la porte arrière (8), et
dans lequel l'élément déflecteur d'air de toit (24) peut être abaissé dans sa position de base par son poids propre lorsque la porte arrière est ouverte, avec le moyen d'appui (26) saillant vers l'arrière.

11. Système de béquet arrière (10) selon la revendication 10, **caractérisé en ce que** le moyen d'appui est une came (26), qui est formée d'une pièce avec l'élément déflecteur d'air de toit (24) et qui présente une face de came (26a) pour l'appui sur une structure de véhicule (2) et pour le roulement sur la structure de véhicule (2) avec pivotement de la came (26) lors de la fermeture de la porte arrière (8).

12. Système de béquet arrière (10) selon la revendication 10 ou 11, **caractérisé en ce que** le dispositif de fixation (20) est configuré pour la fixation à un bord supérieur (8a) de la porte arrière (8) par exemple dans des trous sur le bord supérieur (8a) de la porte arrière (8).

13. Système de béquet arrière (10) selon l'une quelconque des revendications 10 à 12, **caractérisé en ce que** le dispositif de fixation (20) présente un axe de rotation (23), sur lequel l'élément déflecteur d'air de toit (24) est monté de façon pivotante, et des moyens d'insertion (21), par exemple des tiges d'insertion (21) s'étendant verticalement vers le bas, à insérer dans le bord supérieur (8a) de la porte arrière (8).

14. Système de béquet arrière (10) selon l'une quelconque des revendications précédentes, **caractérisé en ce qu'**il présente deux béquets latéraux (16, 17) et deux béquets de toit (13, 14) à fixer à deux portes arrière (8, 9), dans lequel dans la position de base avec les portes arrière ouvertes (8, 9), le béquet latéral est prévu respectivement pour s'appliquer sur le béquet de toit respectif rabattu vers le bas.

15. Ensemble composé d'un véhicule et d'un système de béquet arrière (10) selon la revendication 14 installé à sa région arrière,
dans lequel des portes arrière (8, 9) du véhicule (1) peuvent être rabattues vers l'extérieur d'environ 270° après leur déverrouillage à partir de leur position fermée et être appliquées ou verrouillées respectivement sur une paroi latérale (4, 5) du véhicule (1),
dans lequel chaque fois après déverrouillage du moyen de verrouillage (36), chaque élément déflecteur d'air latéral (32) peut pivoter autour de la deuxième articulation rotative (34) et l'aile oscillante (30) peut pivoter autour de la première articulation rotative (31).
